(19) Europäisches Patentamt

European Patent Office

Office européen des brevets

(11) **EP 1 051 030 A2**

(12) **EUROPÄISCHE PATENTANMELDUNG**

(43) Veröffentlichungstag:
**08.11.2000  Patentblatt 2000/45**

(51) Int. Cl.[7]: **H04N 5/265**

(21) Anmeldenummer: **00201520.4**

(22) Anmeldetag: **25.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **03.05.1999 DE 19920089**

(71) Anmelder:
• **Philips Corporate Intellectual Property GmbH**
  **52064 Aachen (DE)**
  Benannte Vertragsstaaten:
  **DE**
• **Koninklijke Philips Electronics N.V.**
  **5621 BA  Eindhoven (NL)**
  Benannte Vertragsstaaten:
  **FR GB**

(72) Erfinder:
• **Grzibek, Rolf,**
  **Philips Corporate**
  **52064 Aachen (DE)**
• **Krug, Alfred,**
  **Philips Corporate**
  **52064 Aachen (DE)**

(74) Vertreter:
**Volmer, Georg, Dipl.-Ing.**
**Philips Corporate Intellectual Property GmbH,**
**Habsburgerallee 11**
**52064 Aachen (DE)**

(54) **Videomischer mit Zwischenblendsignalsteuerung**

(57)    Bei einer Vorrichtung zum Mischen von einem ersten und einem zweiten Videosignal, wobei der Bildanteil des ersten und des zweiten Videosignals von einer Steuervorrichtung vorgebbar ist und bei dem zum Erzielen einer Überblendung der Bildanteil des einen Videosignals von der Steuervorrichtung verringert und der Bildanteil des zweiten Videosignals erhöht wird, wird zum Überblenden über ein drittes beliebiges Videosignal vorgeschlagen, dass die Steuervorrichtung dazu vorgesehen ist, während einer Überblendung den Bildanteil wenigstens eines dritten Videosignals zu steuern. Durch die automatische Steuerung des dritten Videosignals lässt sich der Bedienaufwand bei einer derart ausgestalten Mischvorrichtung für einen solchen Effekt erheblich verringern.

FIG. 1

EP 1 051 030 A2

**Beschreibung**

Die Erfindung betrifft eine Mischvorrichtung für Videosignale nach dem Oberbegriff des Anspruchs 1. Die Erfindung betrifft auch das Verfahren für eine solche Mischvorrichtung.

Bei der Produktion von Videobeiträgen werden Mischvorrichtungen für Videosignale, sogenannte Videomischer, verwendet, um Videosignale verschiedener Quellen, z. B. von Kameras, Filmabtastern und Aufzeichnungsvorrichtungen, nach gestalterischen Erfordernissen miteinander zu kombinieren. Wegen der Vielzahl möglicher Quellen weisen solche Mischvorrichtung beispielsweise eine Vorwahlkreuzschiene auf, mir deren Hilfe jeweils zwei in einer Verarbeitungsstufe zu kombinierende Quellen ausgewählt werden können. Die Bildinhalte der beiden vorausgewählten Videosignale werden in der Verarbeitungsstufe überlagert, wobei der Anteil der Bildinhalte der beiden Videosignale im Ausgangssignal gesteuert werden kann. In einer Steuervorrichtung werden zum Erzielen unterschiedlicher Effekte wie beispielsweise weiche Ausblendung, Einblendung, Überblendung, Schnittüberblendung, Tricküberblendung oder Chroma-Key-Überblendung hierzu erforderliche Steuersignale erzeugt.

Aus US 5,109,280 ist beispielsweise ein Video-Effekt-Generator bekannt, bei welchem zwei Eingangssignale in einer elektronischen Mischvorrichtung mittels eines Signalgenerators gemischt werden. Wahlweise kann einer der Eingänge auch mit einem Hintergrundgenerator verbunden werden, welcher ein Farbsignal mit einstellbarer Chrominanz und Luminanz erzeugt.

Bei derart ausgestalteten Mischvorrichtungen ist beispielsweise zu Beginn einer weichen Überblendung von einem ersten Videosignal zu einem zweiten Videosignal die Verarbeitungsstufe so angesteuert, dass deren Ausgangssignal zunächst ausschließlich aus dem Bildanteil des ersten Videosignal gebildet wir; der Bildanteil eines zweiten Videosignals ist somit gleich Null gewählt. Während des Überblendvorgangs wird die Verarbeitungsstufe so gesteuert, dass der Bildanteil des ersten Videosignals von seinem Maximalwert bis auf Null zurückgenommen wird, während der Bildanteil des zweiten Videosignals von Null auf dessen Maximalwert angehoben wird. Bei einer sogenannten V-Überblendung, bei der der Bildanteil des ersten Videosignals zunächst vollständig auf Null zurückgenommen wird, bevor begonnen wird den Bildanteil des zweiten Videosignals im Ausgangssignal zu erhöhen ist durch geeignete Maßnahmen sichergestellt, dass im Übergang zwischen beiden Bildern ein vollständig schwarzes Bild erhalten wird.

Aufgabe der vorliegenden Erfindung ist es die gestalterischen Möglichkeiten der Bildmischung zu erhöhen, wobei der Bedienaufwand möglichst gering gehalten werden soll.

Diese Aufgabe wird mit den kennzeichnenden Merkmalen des Anspruchs 1 gelöst.

Die Erfindung weist den Vorteil auf dass bei Überblendung von einem ersten zu einem zweiten Videosignal ein Übergang über ein drittes Signal - welches im folgenden als Zwischenblendsignal bezeichnet wird - erzielt werden kann. Statt beispielsweise eines schwarzen Bildes in der Mitte einer V-Überlendung ist nun dieses Zwischenblendsignal zu sehen. Das Zwischenblendsignal kann hierbei eine beliebige auswählbare Videoquelle oder auch ein synthetisches Bildsignal mit frei wählbarer Chrominanz und Luminanz sein.

Um einen solchen Effekt mir herkömmlichen Videomischern zu erzeugen, sind während der Überblendung mehrere Bedienschritte einer Bedienperson erforderlich bzw. eine Folge entsprechender Bedienschritte muss vorher gespeichert werden. Mit der vorgeschlagenen Vorrichtung hingegen kann der Anteil des Zwischenblendsignals im Ausgangssignal der Mischvorrichtung vollständig von der Steuervorrichtung gesteuert werden, sobald eine Überblendung vorgenommen wird. Die Bedienperson kann sich damit vollständig auf den Zeitpunkt der Überblendung konzentrieren und ist nicht durch zusätzlich erforderliche Bedienschritte abgelenkt.

Die Erfindung wird nun anhand eines in der Figur dargestellten Ausführungsbeispiels näher beschrieben und erläutert.

Es zeigen:

Fig. 1  Schaltungsanordnung für eine erfindungsgemäße Mischvorrichtung,

Fig. 2  Alternative Schaltungsanordnung,

Fig. 3  Zeitdiagramm für erfindungsgemäßen Mischvorgang.

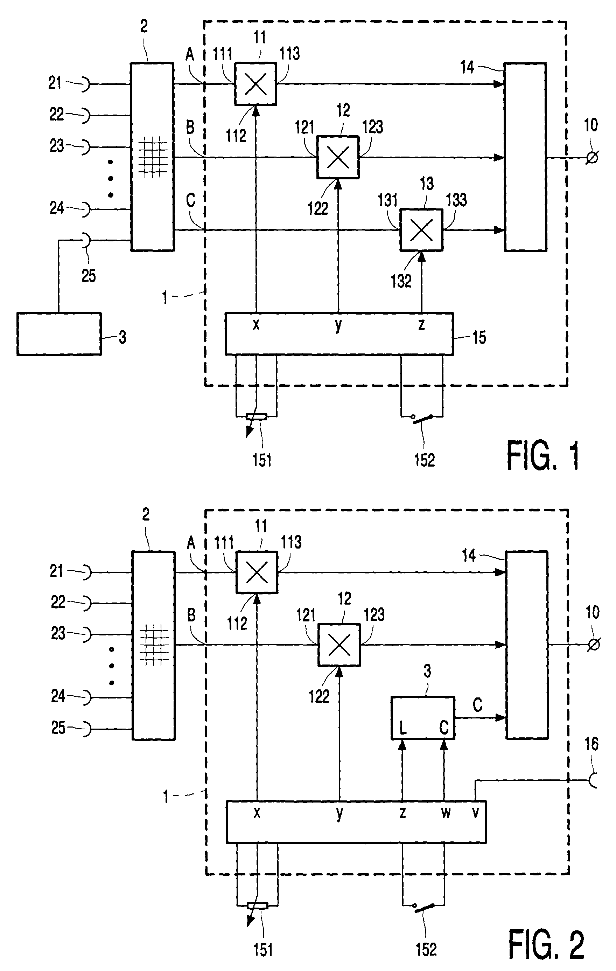

Bei der in Figur 1 gezeigten erfindungsgemäßen Mischvorrichtung wird eine Mischeinheit 1 aus drei Signalsteuermitteln 11, 12, 13 einem Signalkombinierer 14 und einer Steuervorrichtung 15 gebildet. Mittels einer Kreuzschiene 2 können aus an Eingängen 21 - 25 der Kreuzschiene 2 angeschlossener Videoquellen ein erstes, zweites und ein drittes Eingangssignal A, B, C für die Mischeinheit 1 ausgewählt werden. Die ausgewählten Eingangssignale A, B,C sind jeweiligen Eingängen 111, 121, 131 der Signalsteuermittel 11, 12, 13 zugeführt.

Im Ausführungsbeispiel, einem digitalen Mischpult, bei dem die Eingangssignale in digitaler Form vorliegen, sind die Signalsteuermittel 11, 12, 13 aus Multiplizierern gebildet, bei welchen das jeweilige Eingangssignal A, B, C mit einem am jeweiligen Steuereingang 112, 122, 132 anliegenden Stellwert x, y, z multipliziert wird. Bei analogen Mischern mit analogen Eingangssignalen hingegen können die Signalsteuermittel beispielsweise aus spannungssteuerbaren Dämpfungsstufen gebildet sein.

Die Ausgänge 113, 123, 133 der Signalsteuermittel 11, 12, 13 werden im Signalkombinierer 14 normgerecht überlagert, so dass beispielsweise wenn alle Eingangssignale schwarze Bildinhalte aufweisen sich auch am Ausgang 10 der Mischeinheit 1 ein Ausgangssignal mit schwarzen Bildinhalt ergibt.

Mittels nicht dargestellter Vorwahltasten kann bei der Steuervorrichtung 15 die Art der gewünschten Überblendung eingestellt werden. Der Überblendvorgang wird von einer Bedienperson durch Betätigung eines Bedienelementes vorgenommen. Bei einem sogenannten Blendhebel 151 beispielsweise erzeugt die Steuervorrichtung 15 Stellwerte x, y für erstes und zweites Eingangssignal A, B die proportional bzw. umgekehrt proportional zum Stellzustand des Blendhebels 151 sind. Bei Auslösung eines automatischen Überblendvorgangs mittels einer Bedientaste 152 hingegen erzeugt die Steuervorrichtung 15 diese Stellwerte automatisch, wobei die Zeitdauer des Überblendvorgangs durch weitere, nicht dargestellte Einstellelemente vorgegeben werden kann.

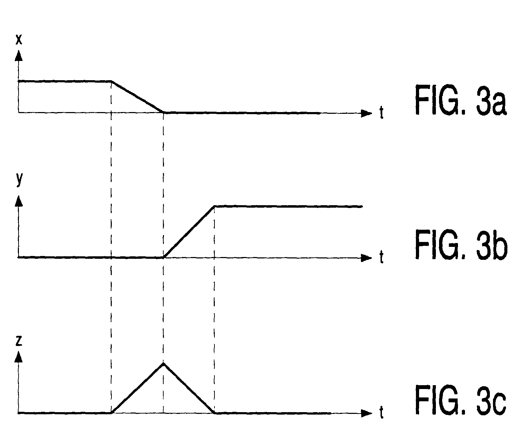

Die Steuervorrichtung erzeugt die für die vorausgewählte Überblendung benötigten Stellwerte x, y, z für die Signalsteuermittel 11, 12, 13 und stellt sie an Ausgängen 151, 152, 153 zur Verfügung. Bei einer V-Überblendung von dem ersten Eingangssignal A zum zweiten Eingangssignal B der Mischeinheit 1 wird zunächst der Stellwert x für das erste Signalsteuermittel 11 zurückgenommen. Der zeitliche Verlauf des ersten Stellwertes x ist in Figur 3a dargestellt. Nachdem der erste Stellwert x vollständig zurückgenommen wurde - das erste Eingangssignal A trägt somit nichts mehr zum Bildinhalt des Ausgangssignals bei - erhöht die Steuervorrichtung 15 den zweiten Stellwert y für das zweite Signalsteuerungsmittel 12 gleitend auf dessen Maximalwert (dargestellt in Figur 3b). Hierdurch wird das zweite Eingangssignal B aufgeblendet.

Erfindungsgemäß erzeugt die Steuervorrichtung 15 einen dritten Stellwert z für das dritte Eingangssignal C der Mischeinheit 1. Im gleichen Maß wie der erste Stellwert x zurückgenommen wird, erhöht die Steuervorrichtung 15 den dritten Stellwert z für das dritte Eingangssignal C, welches im folgenden auf Grund seiner Verwendung als Zwischenblendsignal bezeichnet ist. Mit Beginn des Aufblendens des zweiten Eingangssignals B wird der dritte Stellwert z wider zurückgenommen. Figur 3c zeigt den sich hieraus ergebenden zeitlichen Verlauf des dritten Stellwertes z. Auf diese Weise wird beim Überblenden vom ersten Eingangssignal A zum zweiten Eingangssignal B das Zwischenblendsignal C automatisch ein- und ausgeblendet.

Der dachförmige Signalverlauf des dritten Steuersignals z für das Zwischenblendsignal C ist lediglich als Beispiel gedacht und sollte nicht als Beschränkung der Erfindung genau auf diesen Signalverlauf verstanden werden. Den Fachmann stellt es vor keine Probleme beliebige Signalverläufe für den dritten Stellwert z zu erzeugen um einen wie auch immer gewünschten künstlerischen Effekt zur Verfügung zu stellen.

Vorzugsweise ist die Steuervorrichtung 15 hierbei so ausgebildet, dass bei normgerechten Videosignalen an den Eingängen der Mischstufe zu jedem Zeitpunkt auch ein normgerechtes Videoausgangssignal am Ausgang der Mischstufe erhalten wird. Der Wertebereich der Stellwerte ist von der intern verwendeten Signaldarstellung und Auflösung abhängig. Bei der konkreten Ausgestaltung des Ausführungsbeispiels ist der Schwarzwert gleich dem Binärwert „0" gewählt. In diesem Fall kann die Überwachung eines normgerechten Videosignals in einfacher Weise dadurch realisiert werden, dass der Stellwert z für das Zwischenblendsignal erforderlichenfalls auf einen Wert begrenzt wird, dass zu jedem Zeitpunkt der Überblendung die Summe x+y+z der drei Stellwerte x, y, z nicht größer als der Stellwert der bei einem vollausgesteuertem normgerechten Videosignal an einem der Eingänge der Mischeinrichtung 1 (alle anderen Eingänge zeigen ein schwarzes Bild) auch wieder ein vollausgesteuertes normgerechtes Videobild am Ausgang 10 der Mischeinrichtung 1 erzeugt. Hierdurch werden Übersteuerungen während des Überblendvorgangs sicher vermieden.

Als Signalquelle für das Zwischenblendsignal kann auch ein Farbgenerator 3 vorgesehen sein welcher an einem Eingang 25 der Kreuzschiene 2 angeschlossen ist und welcher wahlweise statt einer anderen Videoquelle als Zwischenblendsignal auswählbar ist.

Figur 2 zeigt ein anderes Ausführungsbeispiel - bei dem für gleiche Bauteile die gleichen Bezugszeichen wie in Figur 1 verwendet werden - bei dem ein solcher Farbgenerator 3 direkt mit dem Signalkombinierer 14 verbunden ist. Das dritte Stellsignal z der Steuerschaltung 14 ist bei diesem Ausführungsbeispiel direkt mit einem Steuereingang L des Farbgenerators 3 verbunden um bei einem entsprechend ausgelegten Farbgenerator 3 die Luminanz des Farbgenerators 3 zu steuern. Bei beiden Ausführungsbeispielen ergibt sich durch Erzeugung eines weiteren Stellsignals w durch die Steuervorrichtung 14 die Möglichkeit noch andere Signalparameter des Zwischenblendsignals, beispielsweise dessen Chrominanz während eines Überblendvorgangs zu steuern. Dargestellt ist dies in Figur 2 am Beispiel der Ansteuerung des Farbgenerators 3 mit einem Chrominanzsteuereingang C. Bei einem entsprechend ausgestalteten Videomischer kann ein solches viertes Stellsignal jedoch auch den Stelleingängen anderer zwischenschaltbarer bzw. vorgeschalteter interner Signalverarbeitungsstufen zugeführt werden. Auf diese Weise vervielfachen sich die künstlerischen Gestaltungsmöglichkeiten.

Eine weitere Steuerungsmöglichkeit ergibt sich durch Herausführen des dritten Steuersignal bzw. eines hierzu ähnlichen Steuersignals v über eine Schnittstelle 16 zur Ansteuerung externer Geräte. Als ein solches externes Gerät kann beispielsweise auch eine Tonmischvorrichtung an der Schnittstelle 16 angeschlossen sein. Hierdurch kann gleichzeitig mit dem Ein- und Ausblenden des Zwischenblendsignals ein Tonsignal, beispielsweise Applausgeräusche, automatisch zugemischt werden.

Die Erfindung ist nicht auf herkömmliche, aus dedizierter Hardware konstruierte Mischvorrichtung für Videosignale beschränkt. Sie umfasst auch Mischvorrichtungen basierend auf Computerprogrammen, bei welchen digitalisierte Videosignale mittels entsprechender Algorithmen miteinander gemischt werden. Die Stellwerte (v, w, x, y, z) entsprechen in diesem Fall Variablen bzw. Parameterwerten des Computerprogramms.

**Patentansprüche**

1. Vorrichtung zum Mischen von einem ersten und einem zweiten Videosignal (111, 121), wobei der Bildanteil des ersten und des zweiten Videosignals (111, 121) von einer Steuervorrichtung (15) vorgebbar ist und bei dem zum Erzielen einer Überblendung der Bildanteil des einen Videosignals (111) von der Steuervorrichtung (15) verringert und der Bildanteil des zweiten Videosignals erhöht wird, dadurch gekennzeichnet, dass die Steuervorrichtung (15) dazu vorgesehen ist, während einer Überblendung den Bildanteil wenigstens eines dritten Videosignals (131) zu steuern.

2. Mischvorrichtung nach Anspruch 1, dadurch gekennzeichnet, dass die Steuervorrichtung (15) zur Abgabe eines weiteren Steuersignals (v, w) während einer Überblendung vorgesehen ist.

3. Mischvorrichtung nach Anspruch 2, dadurch gekennzeichnet, dass die Mischvorrichtung eine Schnittstelle (16) für ein solches weiteres Steuersignal (v) aufweist.

4. Verfahren zum Mischen von einem ersten und einem zweiten Videosignal (111, 121), wobei der Bildanteil des ersten und des zweiten Videosignals (111, 121) vorgegeben werden kann und bei dem zum Erzielen einer Überblendung der Bildanteil des einen Videosignals (111) verringert und der Bildanteil des zweiten Videosignals erhöht wird, dadurch gekennzeichnet, dass während einer Überblendung der Bildanteil wenigstens eines dritten Videosignals gesteuert wird.

5. Verfahren nach Anspruch 4, dadurch gekennzeichnet, dass mittels eines weiteren Steuersignals (v, w) während einer Überblendung wenigstens eine weiteren Signalverarbeitungsparameter gesteuert wird.

6. Mischvorrichtung nach Anspruch 3, dadurch gekennzeichnet, dass ein an einer Mischvorrichtung extern angeschlossenes Gerät gesteuert wird.

FIG. 1

FIG. 2

x

FIG. 3a

y

FIG. 3b

z

FIG. 3c